## Europäisches Patentamt
## European Patent Office
## Office européen des brevets

(19)

(11) Veröffentlichungsnummer : **0 177 702**
**B1**

(12)

# EUROPÄISCHE PATENTSCHRIFT

(45) Veröffentlichungstag der Patentschrift :
02.03.88

(51) Int. Cl.⁴ : **F 16 H 25/22, E 05 F 15/04**

(21) Anmeldenummer : **85109757.6**

(22) Anmeldetag : **02.08.85**

(54) **Kugelschraubgetriebe zur Umwandlung einer axialen Bewegung in eine Drehbewegung und umgekehrt für Maschinenbauteile.**

(30) Priorität : **12.09.84 DE 3433394**
**04.12.84 DE 3444134**

(43) Veröffentlichungstag der Anmeldung :
**16.04.86 Patentblatt 86/16**

(45) Bekanntmachung des Hinweises auf die Patenter-teilung : **02.03.88 Patentblatt 88/09**

(84) Benannte Vertragsstaaten :
**AT BE FR GB IT NL SE**

(56) Entgegenhaltungen :
**DE-B- 1 961 573**
**DE-C- 366 658**
**DE-C- 520 269**
**DE-U- 8 435 452**
**US-A- 1 885 970**
**US-A- 2 739 491**

(73) Patentinhaber : **Gebrüder Bode & Co. GmbH**
**Ochshäuser Strasse 45**
**D-3500 Kassel (DE)**

(72) Erfinder : **Horn, Manfred**
**Fr.-Ebert-Strasse 12**
**D-3504 Kaufungen 1 (DE)**
Erfinder : **Mayer, Franz**
**Am Haferbach 30**
**D-3504 Kaufungen 2 (DE)**

(74) Vertreter : **Walther, Horst, Dipl.-Ing.**
**Wilhelmshöher Allee 275 Postfach 41 01 08**
**D-3500 Kassel (DE)**

Jouve, 18, rue St-Denis, 75001 Paris, France

## Beschreibung

Die Erfindung betrifft ein Kugelschraubgetriebe zur Umwandlung einer axialen Bewegung in eine Drehbewegung und umgekehrt für Maschinenbauteile, insbesondere zur Erzielung der Drehbewegung einer Drehsäule zum Antrieb von Schwenktüren bei Fahrzeugen, bestehend aus einem undrehbar, aber axial beweglichen Teil mit mindestens einer Schraubennut, sowie einem Drehteil mit mindestens einer Schraubennut, wobei in den Schraubennuten zwischen Drehteil und axial beweglichem Teil Kugeln angeordnet sind, die in einem Führungsteil als Lagerstelle für die Kugeln geführt sind.

Ein derart bekanntes Kugelschraubgetriebe (DE-B-1 961 573) zur Erzielung der Drehbewegung eines Maschinenbauteils, z. B. einer Drehsäule, besitzt als undrehbaren, aber axial beweglichen Teil eine Kolbenstange, welche beispielsweise durch einen pneumatischen Antrieb axial verschiebbar ist, und welche z. B. mit Hilfe von Keilnuten undrehbar gehalten wird. Wird mithin die Kolbenstange und damit der undrehbare, axial bewegliche Teil axial verschoben, dann macht der Drehteil wegen der in den Schraubennuten des Drehteils bzw. des axial beweglichen Teils liegenden Kugeln eine entsprechende Drehbewegung.

Die Halterung der Kugeln erfolgt dabei mit Hilfe eines Kugelkäfigs, der im wesentlichen eine Hülse ist, welche entsprechende Bohrungen aufweist, in denen die Kugeln lagern.

Für ein störungsfreies Arbeiten eines solchen Kugelgetriebes ist Voraussetzung, daß die für die Führung der Kugeln vorgesehenen Bohrungen in dem Kugelkäfig genau die gleiche Steigung und Teilung aufweisen wie die Schraubennuten des axial beweglichen Teils bzw. des Drehteils. Treten hierbei schon geringfügige Abweichungen auf, dann treten Verspannungen auf, so daß das Abrollen der Kugeln in den Schraubennuten beeinträchtigt ist.

Hinzu kommt, daß der Kugelkäfig seine Lage leicht bzw. geringfügig verändert. Das ist auf einen unregelmäßigen Kraftschluß im Getriebe und die Wirkung der Schwerkraft auf die Kugeln bzw. den Kugelkäfig zurückzuführen. Die Folge davon ist, daß es vor Erreichen der Endposition des Drehteils zum Anlaufen des Kugelkäfigs an ein Hindernis kommt, so daß dann der Kugelschraubtrieb mehr einem Gleitschraubtrieb nahekommt.

In verstärktem Maße ist das der Fall, wenn es sich um ein Kugelgetriebe handelt, dessen Arbeitsstellung die vertikale Lage ist ; denn dann erhalten die Kugeln und der Kugelkäfig durch die Schwerkraft starke Bewegungsimpulse in Richtung einer Bewegungsendlage. Ein ordnungsgemäßes Arbeiten eines solchen Kugelgetriebes ist jedenfalls dann nicht mehr gewährleistet.

Besondere Schwierigkeiten ergeben sich bei durch Drehsäulen angetriebenen Schwenktüren, wobei die Drehbewegung der Drehsäule mit Hilfe eines Kugelgetriebes erzeugt wird, dann, wenn solche Drehsäulen längere Zeit in Betrieb sind. Es hat sich nämlich gezeigt, daß die Kraft für die Öffnungs- bzw. für die Schließbewegung zwar immer noch in den axial beweglichen Teil eingeleitet werden kann, ohne daß die Schwenktür zum Klemmen neigt ; muß jedoch die Tür von Hand geöffnet werden, wobei dann die Kraft am Drehteil angreift, dann hat sich ergeben, daß hierzu ein erheblicher Kraftaufwand erforderlich ist, der von manchen Personen nicht aufgebracht werden kann.

Der Erfindung liegt daher die Aufgabe zugrunde, ein Kugelschraubgetriebe zur Umwandlung einer axialen Bewegung in eine Drehbewegung für Maschinenbauteile zu schaffen, das auch noch nach längerer Betriebszeit absolut leichtgängig ist.

Das wird erfindungsgemäß dadurch erreicht, daß das Führungsteil als in Achsrichtung elastisch nachgiebige Lagerstelle für die Kugeln ausgebildet ist. Nach einer bevorzugten Ausführungsform ist das Führungsteil eine Schraubenfeder. Die Gangrichtung der Schraubenfeder ist dabei umgekehrt zu der der Schraubennuten.

Nach einem weiteren Merkmal der Erfindung ist das Führungsteil elastisch abgestützt. Dabei erfolgt bei vertikaler Arbeitsstellung des Schraubgetriebes die Abstützung des Führungsteils durch ein Federelement, vorzugsweise eine Schraubenfeder.

Bei horizontaler Arbeitsstellung des Schraubgetriebes ist das Führungsteil zwischen zwei Federelementen, vorzugsweise zwei Schraubenfedern, angeordnet. Die Schraubenfedern zur Abstützung des Führungsteils sind dabei endseitig im Drehteil befestigt.

Die Ausbildung des Führungsteils als elastisch nachgiebige Lagerstelle für die Kugeln vermeidet eine Klemmneigung auch nach einer gewissen Abnutzung der dem Verschleiß unterworfenen Teile des Schraubgetriebes.

Die Änderung der Gangrichtung der Schraubenfeder in bezug auf die Schraubennut vermeidet, daß die Kugeln entlang der Feder in der Schraubennut herunterrollen, was insbesondere dann der Fall wäre, wenn die Gangrichtung zwischen Schraubennut und Feder gleich wäre.

Die elastische Abstützung des Führungsteils ergibt keine absolut genaue Positionierung der Kugeln in der Schraubennut, vielmehr variieren die Kugeln in der Schraubennut infolge dieser elastischen Abstützung des Führungsteils ihre Lage geringfügig. Das hat zur Folge, daß die sonst zu befürchtende Grübchenbildung in den Schraubennuten, verursacht durch die Richtungsänderung der Antriebskräfte, verhindert ist, da die Kugeln nicht ständig die gleiche Lage einnehmen.

In der Zeichnung ist eine beispielsweise Ausführungsform dargestellt.

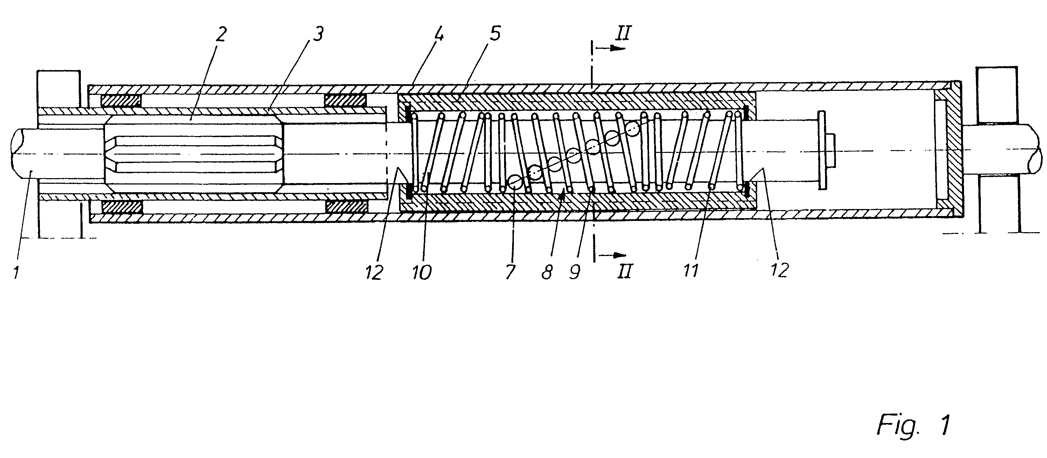

Fig. 1 zeigt einen Längsschnitt durch das erfindungsgemäße Kugelschraubgetriebe ;

Fig. 2 ist ein Schnitt gemäß der Linie II-II.

Mit 1 ist der undrehbare, aber axial bewegliche Teil bezeichnet, der die Schraubennuten 6 aufweist. Das Mitdrehen des Teils 1 bei der Funktion des Schraubgetriebes wird dadurch verhindert, daß der Teil 1 mit einer Keilverzahnung 2 versehen ist, die mit einer entsprechend verzahnten Lagerhülse 3 zusammenarbeitet.

Konzentrisch zu dem undrehbar, aber axial beweglichen Teil 1 ist der Drehteil 5 angeordnet, auf dem fest ein Rohr 4 angebracht ist, das auch eine Drehsäule für eine Fahrzeugtür sein kann.

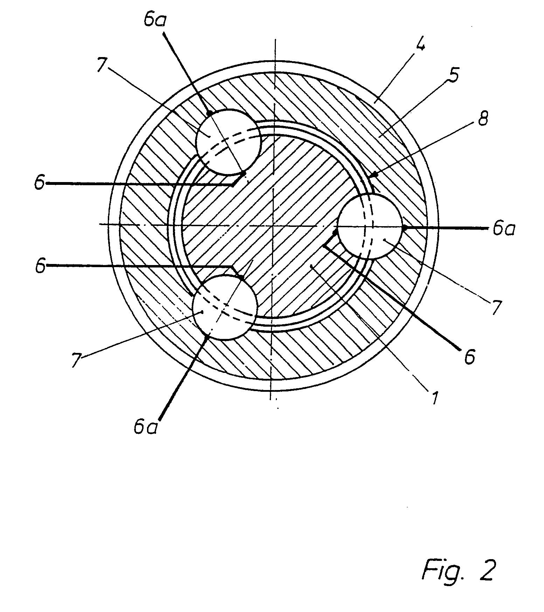

Wie die Fig. 2 zeigt, befinden sich in dem undrehbar, aber axial beweglichen Teil 1 drei Schraubennuten 6. Entsprechend befinden sich in dem Drehteil 5 drei Schraubennuten 6a. Der undrehbar, aber axial bewegliche Teil 1 und der Drehteil 5 sind kinematisch durch Kugeln 7 verbunden. Die Kugeln 7 sind durch ein insgesamt mit 8 bezeichnetes Führungsteil geführt, das als elastisch nachgiebige Lagerstelle für die Kugeln ausgebildet ist und nach der bevorzugten Ausführungsform eine Schraubenfeder 9 ist.

Durch die Ausbildung des Führungsteils als elastisch nachgiebige Lagerstelle, insbesondere als Schraubenfeder, ist mithin erreicht, daß die ggf. in den Nuten vorhandenen Abweichungen beispielsweise hinsichtlich der Steigung oder dergleichen zu keiner Klemmneigung führen, da durch die Feder diese Fehler ausgeglichen werden.

Dabei ist die Gangart der Schraubenfeder umgekehrt zu der der Schraubennuten.

Das Führungsteil ist elastisch abgestützt. Besitzt das Schraubgetriebe eine horizontale Arbeitsstellung, dann erfolgt die elastische Abstützung mit Hilfe von zwei Schraubenfedern 10 und 11, wobei das Führungsteil 8 dann zwischen diesen Schraubenfedern 10 und 11 liegt.

Durch diese Ausbildung ist die Mittellage des Führungsteils 8 nicht genau präzisiert, vielmehr wird die Mittellage des Führungsteils 8 sich geringfügig nach der einen oder nach der anderen Seite verändern, was zur Folge hat, daß die Kugeln nicht immer die gleiche Position einnehmen. Dadurch wird die Grübchenbildung in der Schraubennut weitgehend verhindert.

Bei vertikaler Arbeitsstellung des Schraubgetriebes, wie es bei Drehsäulen der Fall ist, genügt eine Feder unter dem Führungsteil 8, um eine elastische Abstützung des Führungsteils zu bewirken.

Die Federn 10 und 11 sind endseitig im Drehteil 5 bei 12 befestigt.

## Patentansprüche

1. Kugelschraubgetriebe zur Umwandlung einer axialen Bewegung in eine Drehbewegung und umgekehrt für Maschinenbauteile, insbesondere zur Erzielung der Drehbewegung einer Drehsäule zum Antrieb von Schwenktüren bei Fahrzeugen, bestehend aus einem undrehbar, aber axial beweglichen Teil (1) mit mindestens einer Schraubennut (6), sowie einem Drehteil (5) mit mindestens einer Schraubennut (6a), wobei in den Schraubennuten zwischen Drehteil und axial beweglichem Teil Kugeln (7) angeordnet sind, die in einem Führungsteil als Lagerstelle für die Kugeln geführt sind, dadurch gekennzeichnet, daß das Führungsteil (8) als in Achsrichtung elastisch nachgiebige Lagerstelle für die Kugeln ausgebildet ist.

2. Kugelschraubgetriebe nach Anspruch 1, dadurch gekennzeichnet, daß das Führungsteil (8) eine Schraubenfeder (9) ist.

3. Kugelschraubgetriebe nach Anspruch 2, dadurch gekennzeichnet, daß die Gangrichtung der Schraubenfeder (9) umgekehrt zu der der Schraubennuten (6, 6a) ist.

4. Kugelschraubgetriebe nach Anspruch 1, dadurch gekennzeichnet, daß das Führungsteil (8) elastisch abgestützt ist.

5. Kugelschraubgetriebe nach Anspruch 4, dadurch gekennzeichnet, daß bei vertikaler Arbeitsstellung des Schraubgetriebes das Führungsteil (8) unten durch ein Federelement, vorzugsweise eine Schraubenfeder, abgestützt ist.

6. Kugelschraubgetriebe nach Anspruch 4, dadurch gekennzeichnet, daß bei horizontaler Arbeitsstellung des Schraubgetriebes das Führungsteil (8) zwischen zwei Federelementen, vorzugsweise Schraubenfedern (10, 11), angeordnet ist.

7. Kugelschraubgetriebe nach Anspruch 4, dadurch gekennzeichnet, daß die Schraubenfedern (10, 11) zur Abstützung des Führungsteils (8) endseitig in dem Drehteil (5) befestigt sind.

## Claims

1. Ball screw gear for the conversion of an axial movement into a rotational movement and vice versa for machine components, in particular for the attainment of the rotational movement of a rotary column for the drive of swivel doors in vehicles, and consisting of a non-rotatable, but axially movable part (1) with at least one helical groove (6), as well as of a rotary part (5) with at least one helical groove (6a), wherein balls (7), which are guided in a guide part as bearing place for the balls, are arranged between rotary part and axially movable part in the helical grooves, characterised thereby, that the guide part (8) is constructed as a bearing place, which is yielding elastically in axial direction, for the balls.

2. Ball screw gear according to claim 1, characterised thereby, that the guide part (8) is a helical spring (9).

3. Ball screw gear according to claim 2, characterised thereby, that the thread direction of the helical spring (9) is opposite to that of the helical grooves (6, 6a).

4. Ball screw gear according to claim 1, characterised thereby, that the guide part (8) is supported elastically.

5. Ball screw gear according to claim 4, characterised thereby, that the guide part (8) is supported below by a spring element, preferably a helical spring, in the case of vertical operative setting of the screw gear.

6. Ball screw gear according to claim 4, characterised thereby, that the guide part (8) is arranged between two spring elements, preferably helical springs (10, 11), in the case of horizontal operative setting of the screw gear.

7. Ball screw gear according to claim 4, characterised thereby, that the helical springs (10, 11) for the support of the guide part (8) are at one end fastened in the rotary part (5).

**Revendications**

1. Transmission à vis à billes pour convertir un mouvement axial en un mouvement rotatif et inversement dans des éléments mécaniques, notamment pour produire la rotation d'une colonne rotative pour l'entraînement de portes pivotantes dans des véhicules, comprenant une pièce (1) non rotative mais mobile axialement et pourvue d'au moins une rainure hélicoïdale (6), ainsi qu'une pièce rotative (5) pourvue d'au moins une rainure hélicoïdale (6a), tandis que des billes (7) sont disposées dans les rainures hélicoïdales entre la pièce rotative et la pièce mobile axialement et sont guidées dans une pièce de guidage servant d'appui pour les billes, caractérisée en ce que la pièce de guidage (8) est constituée de façon à former un appui pour les billes qui est flexible élastiquement en direction axiale.

2. Transmission à vis à billes selon la revendication 1, caractérisée en ce que la pièce de guidage (8) est un ressort hélicoïdal (9).

3. Transmission à vis à billes selon la revendication 2, caractérisée en ce que le sens de l'hélice du ressort hélicoïdal (9) est opposé à celui des rainures hélicoïdales (6, 6a).

4. Transmission à vis à billes selon la revendication 1, caractérisée en ce que la pièce de guidage (8) est appuyée élastiquement.

5. Transmission à vis à billes selon la revendication 4, caractérisée en ce que, pour une position verticale de travail de la transmission, la pièce de guidage (8) est appuyée à sa base par un élément à ressort, de préférence un ressort hélicoïdal.

6. Transmission à vis à billes selon la revendication 4, caractérisée en ce que, pour une position horizontale de travail de la transmission, la pièce de guidage (8) est disposée entre deux éléments à ressorts, de préférence deux ressorts hélicoïdaux (10, 11).

7. Transmission à vis à billes selon la revendication 4, caractérisée en ce que les ressorts hélicoïdaux (10, 11) servant à appuyer la pièce de guidage (8) sont fixés dans la pièce rotative (5) à leur extrémité.

Fig. 1

0 177 702

Fig. 2